# EUROPÄISCHE PATENTSCHRIFT

(11) **EP 3 371 475 B1**
(45) Veröffentlichungstag und Bekanntmachung des Hinweises auf die Patenterteilung: **23.10.2019**
(21) Anmeldenummer: 16787860.2
(22) Anmeldetag: 27.10.2016
(51) Int. Cl.: F16D 48/06

(54) **VERFAHREN UND STEUEREINHEIT ZUR VERMEIDUNG VON ZUGAUSSETZERN IM ANTRIEBSSTRANG EINES FAHRZEUGS**
METHOD AND CONTROL UNIT FOR AVOIDING FAILURE IN THE DRIVETRAIN OF A VEHICLE
PROCÉDÉ ET UNITÉ DE COMMANDE PERMETTANT D'ÉVITER LES PERTES DE TRACTION DANS LA CHAÎNE CINÉMATIQUE D'UN VÉHICULE

(30) Priorität: 03.11.2015 DE 102015221542
(43) Veröffentlichungstag der Anmeldung: 12.09.2018
(73) Patentinhaber: Bayerische Motoren Werke Aktiengesellschaft, 80809 München (DE)
(72) Erfinder: ALBERTZ, Frank, 85391 Allershausen (DE); KOLMEDER, Sebastian, 84048 Mainburg (DE); RONNER, Gerhard, 84104 Hebrontshausen (DE)
(86) Internationale Anmeldenummer: PCT/EP2016/075896
(87) Internationale Veröffentlichungsnummer: WO 2017/076732

(56) Entgegenhaltungen:
- WO-A1-02/093033
- DE-A1-102006 030 142
- JP-A- S58 134 232

## Beschreibung

Die Erfindung betrifft ein Verfahren und eine entsprechende Steuereinheit zur Vermeidung von Zugaussetzern im Antriebsstrang eines Kraftfahrzeugs.

Der Antriebsstrang eines Kraftfahrzeugs kann einen Verbrennungsmotor und ein manuelles Schaltgetriebe mit einer manuell betätigten Kupplung umfassen. Desweiteren kann der Antriebsstrang ein Bogenfeder-Zweimassenschwungrad zur Drehungleichförmigkeitsentkopplung zwischen dem Verbrennungsmotor und dem restlichen Antriebsstrang umfassen. Um fließende Schaltvorgänge in einen niedrigeren oder höheren Gang zu ermöglichen, kann motorsteuerungsseitig eine Anschlussdrehzahlregelung vorgesehen sein, durch die bei einem Schaltvorgang die Drehzahl des Verbrennungsmotors an eine Eingangs-Drehzahl des Getriebes angepasst werden kann.

In Offenlegungsschrift DE 10 2006 030 142 A1 wird ein Verfahren zur Steuerung einer automatisierten Reibungskupplung beschrieben. Zur Erzielung eines komfortablen und laststoßarmen Schließvorgangs der Reibungskupplung ist vorgesehen, dass ein mit abnehmender Drehzahldifferenz ansteigender Reibungswert der Reibungskupplung hinsichtlich seiner Auswirkungen auf die Drehmomentübertragungsfähigkeit der Reibungskupplung durch eine entsprechende Anpassung der Anpresskraft der Reibungskupplung weitgehend kompensiert wird.

Bei Antriebssträngen mit einem Bogenfeder-Zweimassenschwungrad (kurz ZMS) kann es im Anschluss an einen Schaltvorgang zu ruckartigen Bewegungen,
insbesondere zu sogenannten Zugaussetzern, kommen, die von einem Insassen eines Fahrzeugs als unangenehm empfunden werden können. Das vorliegende Dokument befasst sich mit der technischen Aufgabe, ein Verfahren und eine entsprechende Steuereinheit bereitzustellen, durch die derartige Zugaussetzer vermieden werden können.

Die Aufgabe wird durch die unabhängigen Ansprüche gelöst. Vorteilhafte Ausführungsformen werden u.a. in den abhängigen Ansprüchen beschrieben.

Gemäß einem Aspekt wird ein Verfahren zur Steuerung eines Antriebsstrangs eines Fahrzeugs bei einem Schaltvorgang beschrieben. Der Antriebsstrang umfasst einen Antriebsmotor (insbesondere einen Verbrennungsmotor), der über ein Bogenfeder-Zweimassenschwungrad (ZMS) mit einem durch eine Kupplung entkuppelbaren Getriebe verbunden ist. Dabei kann die Kupplung manuell (typischerweise über ein Kupplungspedal) durch einen Fahrer des Fahrzeugs geöffnet bzw. geschlossen werden. Desweiteren kann ein Übersetzungsverhältnis des Getriebes manuell durch den Fahrer des Fahrzeugs (z.B. über einen Schaltknüppel) geändert werden.

Das ZMS umfasst zumindest eine Bogenfeder, die in einem Bogenfederkanal entlang einer Rotationsrichtung des ZMS (z.B. entlang eines Umfangs einer Primärschwungscheibe des ZMS) angeordnet ist. Die Bogenfeder dreht sich dabei zusammen mit dem ZMS (z.B. mit einer Drehzahl von 3000 Umdrehungen/Minute oder mehr) und wird aufgrund von Fliehkräften an eine Innenwand des Bogenfederkanals gedrückt. Dabei kann es zu einer Haftung der Bogenfeder innerhalb des Bogenfederkanals kommen.

Das Verfahren umfasst das Detektieren, dass die Kupplung im Rahmen eines Schaltvorgangs (insbesondere eines Hochschaltvorgangs) geschlossen wird. Insbesondere kann detektiert werden, dass ein Fahrer des Fahrzeugs (z.B. durch Loslassen des Kupplungspedals) ein Schließen der Kupplung veranlasst. Desweiteren kann detektiert werden, dass vor Schließen der Kupplung ein Übersetzungsverhältnis des Getriebes geändert wurde (z.B. so dass die Eingangs-Drehzahl des Getriebes reduziert wurde).

Desweiteren kann das Verfahren das Generieren eines Drehmoment-Eingriffs am ZMS umfassen. Dabei kann der Drehmoment-Eingriff derart generiert werden, dass eine Fliehkraft-verursachte Haftreibung der Bogenfeder im Bogenfederkanal nicht überwunden wird, d.h. der Drehmoment-Eingriff kann die Fliehkraft-verursachte Haftreibung der Bogenfeder im Bogenfederkanal unterstützen, um die Bogenfeder in einer bestimmten Position (insbesondere auf der gleichen Seite wie unmittelbar vor dem Schaltvorgang) zu halten. Mit anderen Worten, der Drehmoment-Eingriff kann verhindern, dass die Bogenfeder innerhalb des Bogenfederkanals bewegt und in eine andere Lage gebracht wird. Alternativ oder ergänzend kann die Bogenfeder durch den Drehmoment-Eingriff in eine bestimmte, vordefinierte Lage im Bogenfederkanal gebracht bzw. in dieser bestimmten Lage gehalten werden. Insbesondere kann der Drehmoment-Eingriff am ZMS derart generiert werden, dass die Bogenfeder (unmittelbar) nach Schließen der Kupplung auf der gleichen Seite des ZMS angeordnet ist (und dort verbleibt) wie (unmittelbar) vor Öffnen der Kupplung.

Der Drehmoment-Eingriff erfolgt in automatischer Weise (z.B. durch eine entsprechende Ansteuerung des Antriebsmotors). Insbesondere erfolgt der Drehmoment-Eingriff unabhängig von einer Drehmomentanforderung durch den Fahrer des Fahrzeugs, z.B. unabhängig von der Auslenkung des Fahrpedals des Fahrzeugs.

Durch die automatische Generierung eines Drehmoment-Eingriffs (z.B. eines Drehmoment-Pulses) kann somit erreicht werden, dass sich die Bogenfeder während eines Schaltvorgangs nicht bzw. weniger bewegt, und damit in eine bestimmte, vordefinierte Lage gebracht bzw. gehalten wird. So können ein späteres Durchrutschen der Bogenfeder durch den Bogenfederkanal und ein damit verbundener, spürbarer Ruck im Antriebsstrang vermieden werden. Insbesondere kann so ein Zugaussetzer bei einem Beschleunigungsvorgang mit Hochschalten in einen höheren Gang vermieden werden.

Die Bogenfeder kann im Bogenfederkanal auf einer Zugseite oder auf einer Schubseite des ZMS angeordnet sein. Dabei liegt die Bogenfeder im Zugbetrieb des Antriebsstrangs typischerweise auf der Zugseite. Andererseits liegt die Bogenfeder im Schubbetrieb des Antriebsstrangs typischerweise auf der Schubseite. Während eines Schaltvorgangs werden der Antriebsstrang und insbesondere das ZMS typischerweise weder im Zugbetrieb noch im Schubbetrieb betrieben. Insbesondere kann das ZMS während des Schaltvorgangs lastfrei sein. Dies kann dazu führen, dass sich die Bogenfeder im Anschluss eines Schaltmanövers in einer undefinierten Lage befindet. Insbesondere kann dies dazu führen, dass sich die Bogenfeder im Anschluss an ein Hochschaltmanöver auf der Schubseite befindet, und es so bei einer anschließenden Beschleunigung zu einem Zugaussetzer im Antriebsstrang kommt. Der Drehmoment-Eingriff kann daher (insbesondere bei einem Hochschaltmanöver) derart ausgelegt sein, dass die Bogenfeder durch den Drehmoment-Eingriff auf der Zugseite des ZMS bleibt, d.h. nicht auf der Schubseite abgelegt wird. Dies kann insbesondere durch einen Drehmoment-Eingriff auf der Primärseite des ZMS (z.B. auf die Primärschwungscheibe des ZMS) bewirkt werden. Ein solcher Drehmoment-Eingriff kann durch den Antriebsmotor (z.B. durch das Einspritzen von Treibstoff in den Antriebsmotor) generiert werden.

Der Drehmoment-Eingriff kann derart generiert werden, dass die Haftreibung der Bogenfeder während einer Phase unterstützt wird, in der durch das Schließen der Kupplung Schwingungen im ZMS bewirkt werden. Insbesondere kann der Drehmoment-Eingriff erfolgen, bevor die, durch das Schließen der Kupplung verursachten, Schwingungen auf einen vordefinierten Anteil der ursprünglichen Schwingungsenergie abgeklungen sind. Der vordefinierte Anteil kann z.B. bei 20%, 10% oder weniger der ursprünglichen Schwingungsenergie liegen. Es kann somit unmittelbar nach dem Schließen der Kupplung ein automatischer Drehmoment-Eingriff erfolgen, um die Lage der Bogenfeder zu beeinflussen. Dies ist vorteilhaft, da so der Drehmoment-Eingriff durch die Schwingungen während des Schaltmanövers maskiert werden kann (und somit für einen Insassen des Fahrzeugs unbemerkt bleibt).

Das Verfahren kann das Ermitteln einer Drehzahl des Antriebsmotors bzw. der Kurbelwelle umfassen. Der Drehmoment-Eingriff und insbesondere die Amplitude und/oder die Energie des Drehmoment-Eingriffs können dann von der Drehzahl des Antriebsmotors abhängen. Dabei kann die Energie bzw. Amplitude des Drehmoment-Eingriffs mit steigender Drehzahl des Antriebsmotors bzw. der Kurbelwelle ansteigen. So kann in zuverlässiger Weise eine Änderung der Lage der Bogenfeder bewirkt werden. Desweiteren kann die Spürbarkeit des Drehmoment-Eingriffs für einen Insassen des Fahrzeugs reduziert werden.

Das ZMS umfasst typischerweise eine Primärschwungscheibe (die meist starr mit der Kurbelwelle des Antriebsmotors verbunden ist) und eine Sekundärschwungscheibe mit einem Flansch (die meist starr mit der Kupplung verbunden ist). Die Primärschwungscheibe und die Sekundärschwungscheibe können gegeneinander verdreht werden, wobei durch die Bogenfeder das Ausmaß der Verdrehung gedämpft werden kann. Insbesondere kann durch die Bogenfeder eine Kraft in Richtung einer Neutralstellung zwischen Primärschwungscheibe und Sekundärschwungscheibe bewirkt werden. Die Bogenfeder kann in dem Bogenfederkanal durch einen Flanschflügel des Flansches komprimiert werden, um ein Drehmoment von der Primärschwungscheibe auf die Sekundärschwungscheibe (oder umgekehrt) zu übertragen. Der Drehmoment-Eingriff kann derart ausgelegt sein, dass durch den Drehmoment-Eingriff das durch eine Antriebsstrangschwingung oder durch das Kupplungsmoment anliegende Schnittmoment kompensiert wird, so dass die Fliehkraft-verursachte Haftreibung zwischen einer Innenwand des Bogenfederkanals und der Bogenfeder nicht überwunden wird, und so dass die Bogenfeder nicht auf die Schubseite verschoben wird. Mit anderen Worten kann der Drehmoment-Eingriff die Fliehkraft-verursachte Haftreibung zwischen der Innenwand des Bogenfederkanals und der Bogenfeder derart unterstützen, dass die Bogenfeder auf der gleichen Seite des ZMS verbleibt (bzw. dort abgelegt wird) wie vor Öffnen der Kupplung. Insbesondere kann ein Drehmoment-Eingriff erfolgen, der eine Kraft auf die Bogenfeder bewirkt, die die Bogenfeder auf die Seite des ZMS drückt (insbesondere auf die Zugseite), auf der die Bogenfeder unmittelbar vor Öffnen der Kupplung angeordnet war.

Der Drehmoment-Eingriff kann zeitlich nach einer Anpassung einer Drehzahl des Antriebsmotors und einer Eingangs-Drehzahl des Getriebes erfolgen. Insbesondere kann der Drehmoment-Eingriff zu einem Zeitpunkt erfolgen, an dem eine relative Abweichung der Kurbelwellen-Drehzahl von der Eingangs-Drehzahl betraglich kleiner als oder gleich wie ein vordefinierter Abweichungs-Schwellenwert ist, z.B. ein Abweichungs-Schwellenwert von 10%, 5%, 1% oder weniger. Der Drehmoment-Eingriff kann somit an einem Zeitpunkt erfolgen, an dem die Kupplung bereits substantiell geschlossen ist.

Alternativ oder ergänzend kann der Drehmoment-Eingriff innerhalb einer vorbestimmten Zeit nach dem Detektieren des Schließvorgangs der Kupplung erfolgen. Die Zeit kann dabei insbesondere 1 Sekunde, 0,5 Sekunden, 0,2 Sekunden oder weniger sein. Eine bevorzugte Zeit liegt bei 0,2 Sekunden oder weniger. Der Drehmoment-Eingriff kann somit unmittelbar nach Schließen der Kupplung erfolgen, so dass die Antriebsreaktion für einen Insassen des Fahrzeugs nicht spürbar oder zumindest nicht überraschend erfolgt.

Der Drehmoment-Eingriff kann eine zeitlich begrenzte Dauer aufweisen. Insbesondere kann der Drehmoment-Eingriff einen Drehmoment-Puls umfassen, bzw. einem Drehmoment-Puls entsprechen. Die Dauer des Drehmoment-Eingriffs kann z.B. 1 Sekunde, 0,5 Sekunden, 0,2 Sekunden, 0,1 Sekunden oder weniger betragen. Eine bevorzugte Dauer liegt bei 0,2 Sekunden oder weniger. So kann erreicht werden, dass der Drehmoment-Eingriff für einen Insassen kaum oder gar nicht spürbar ist.

Die Kupplung kann in Reaktion auf eine Eingabe des Fahrers des Fahrzeugs (z.B. durch Betätigen bzw. Lösen des Kupplungspedals) geöffnet und anschließend wieder geschlossen werden. Desweiteren kann ein Umsetzungsverhältnis des Getriebes in Reaktion auf eine Eingabe des Fahrers des Fahrzeugs (z.B. durch Betätigen des Schaltknüppels) bei geöffneter Kupplung derart geändert werden, dass eine Eingangs-Drehzahl des Getriebes reduziert wird. Dies kann durch eine Steuereinheit des Fahrzeugs (z.B. durch ein Motorsteuergerät) detektiert werden. Der Drehmoment-Eingriff kann ggf. nur dann erfolgen, wenn detektiert wurde, dass durch Änderung des Übersetzungsverhältnisses des Getriebes die Eingangs-Drehzahl des Getriebes reduziert wird (d.h. dass es sich um ein Hochschaltmanöver handelt).

Im Rahmen des Schaltvorgangs kann nach Änderung des Übersetzungsverhältnisses und vor Schließen der Kupplung eine Drehzahl des Antriebsmotors, insbesondere durch eine aktive Drehzahlregelung, reduziert werden. So kann ein Ruck beim Schließen der Kupplung reduziert werden.

Der in diesem Dokument beschriebene Drehmoment-Eingriff (im Anschluss an das Schließen der Kupplung) kann ohne aktive Anpassung der Drehzahl des Antriebsmotors erfolgen. Insbesondere kann der Drehmoment-Eingriff bei substantiell konstanter Drehzahl erfolgen.

Gemäß einem weiteren Aspekt wird eine Steuereinheit für ein Fahrzeug (insbesondere ein Motorsteuergerät) beschrieben, das eingerichtet ist, das in diesem Dokument beschriebene Verfahren auszuführen.

Gemäß einem weiteren Aspekt wird ein Fahrzeug (insbesondere ein Straßenkraftfahrzeug, z.B. ein Personenkraftwagen, ein Lastkraftwagen oder ein Motorrad) beschrieben, das die in diesem Dokument beschriebene Steuereinheit umfasst.

Gemäß einem weiteren Aspekt wird ein Software (SW) Programm beschrieben. Das SW Programm kann eingerichtet werden, um auf einem Prozessor (z.B. auf einem Steuergerät eines Fahrzeugs) ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Desweiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1a beispielhafte Komponenten eines Antriebsstrangs eines Fahrzeugs;
Figur 1b einen beispielhaften Aufbau eines Zweimassenschwungrads;
Figur 2a beispielhafte Drehzahl-Verläufe bei einem Schaltvorgang;
Figur 2b beispielhafte Phasen bzw. beispielhafte Zustände des ZMS bei einem entsprechenden Schaltvorgang;
Figur 3 einen beispielhaften Drehmoment-Eingriff zur Vermeidung der Verschiebung der Bogenfeder in einem ZMS auf die Schubseite; und
Figur 4 ein Ablaufdiagramm eines beispielhaften Verfahrens zur Unterdrückung von Zugaussetzern in einem Antriebsstrang eines Fahrzeugs.

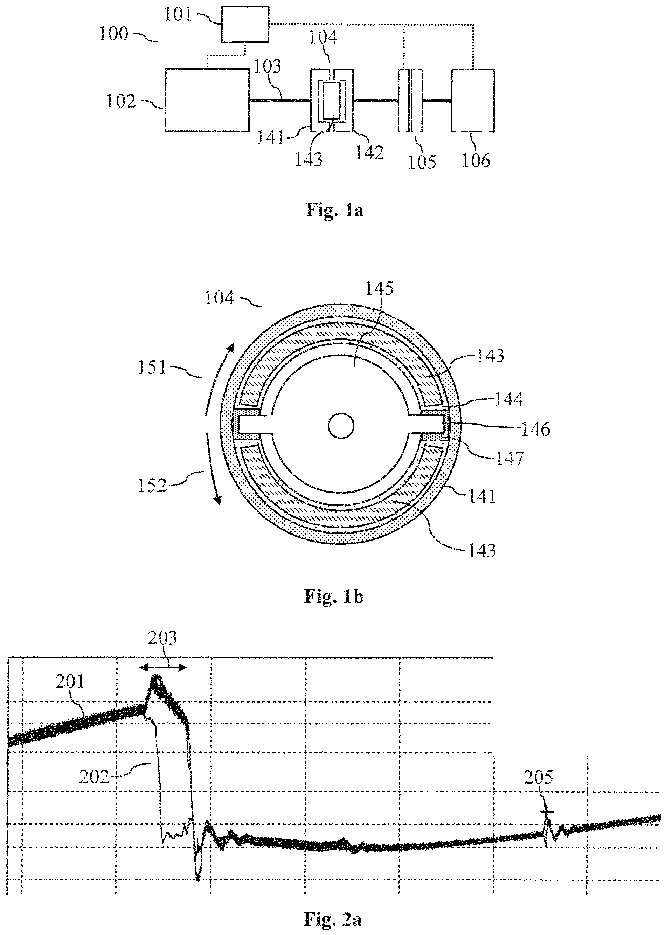

Wie eingangs dargelegt, befasst sich das vorliegende Dokument damit, einen ruckfreien Schaltvorgang in einem Fahrzeug zu ermöglichen. Fig. 1a zeigt in diesem Zusammenhang einen beispielhaften Antriebsstrang 100 eines Fahrzeugs. Ein Verbrennungsmotor 102 treibt eine Kurbelwelle 103 an, die über ein Bogenfeder-Zweimassenschwungrad (kurz ZMS) 104 mit dem restlichen Antriebsstrang gekoppelt ist, insbesondere mit einer Kupplung 105 und einem Getriebe 106. Das ZMS 104 weist eine Primärschwungscheibe 141 und eine Sekundärschwungscheibe 142 auf, die über ein oder mehrere Bogenfedern 143 miteinander gekoppelt sind. Die Bogenfedern 143 ermöglichen eine Verdrehung der Primärschwungscheibe 141 und der Sekundärschwungscheibe 142 zueinander.

Dabei sind typischerweise relativ zu einem neutralen Zustand Verdrehungen von bis zu +/- 70° möglich. Insbesondere kann es in einer Zugphase (z.B. bei einer Beschleunigung) zu einer Verdrehung zu einer sogenannten Zugseite hin (z.B. zu positiven Winkelgraden) und in einer Schubphase (z.B. bei einer Verzögerung) zu einer Verdrehung zu einer sogenannten Schubseite hin (z.B. zu negativen Winkelgraden) kommen. Die ein oder mehreren Bogenfedern 143 sind dabei entlang des Umfangs der Primärschwungscheibe 141 oder der Sekundärschwungscheibe 142 in einem Bogenfederkanal angeordnet und werden bei einer Verdrehung sowohl in Richtung Zug als auch in Richtung Schub gestaucht. Die ein oder mehreren Bogenfedern 143 drehen sich im Betrieb des Verbrennungsmotors 102 mit der Drehzahl der Kurbelwelle 103 und werden durch Zentrifugalkräfte gegen eine Mantelfläche des ZMS 104, insbesondere des Bogenfederkanals, gedrückt.

Fig. 1b zeigt einen beispielhaften Aufbau eines ZMS 104. Insbesondere zeigt Fig. 1b eine Primärschwungscheibe 141 mit einem Bogenfederkanal 144, in den zwei Bogenfedern 143 eingelegt sind. Die Bogenfedern 143 werden durch Bogenfederanschläge 147 im Bogenfederkanal 144 örtlich fixiert. Desweiteren zeigt Fig. 1b einen Flansch 145 mit zwei Flanschflügeln 146. Der Flansch 145 ist fest mit der Sekundärschwungscheibe 142 verbunden. Die Flanschflügel 146 komprimieren bei einer Verdrehung zwischen Primärschwungscheibe 141 und Sekundärschwungscheibe 142 die Bogenfedern 143 innerhalb des Bogenfederkanals 144, wobei die Bogenfedern 143 gegen den jeweiligen Bogenfederanschlag 147 gedrückt werden. Je nach Richtung der Verdrehung kann zwischen der Zugseite 151 und der Schubseite 152 unterschieden werden. Dabei erfolgt eine Verdrehung zur Zugseite 151 hin z.B. in einer Beschleunigungsphase des Antriebsstrangs 100. Andererseits kann bei einer Verzögerungsphase (mit geschlossener Kupplung 105) eine Verdrehung zur Schubseite 152 hin erfolgen.

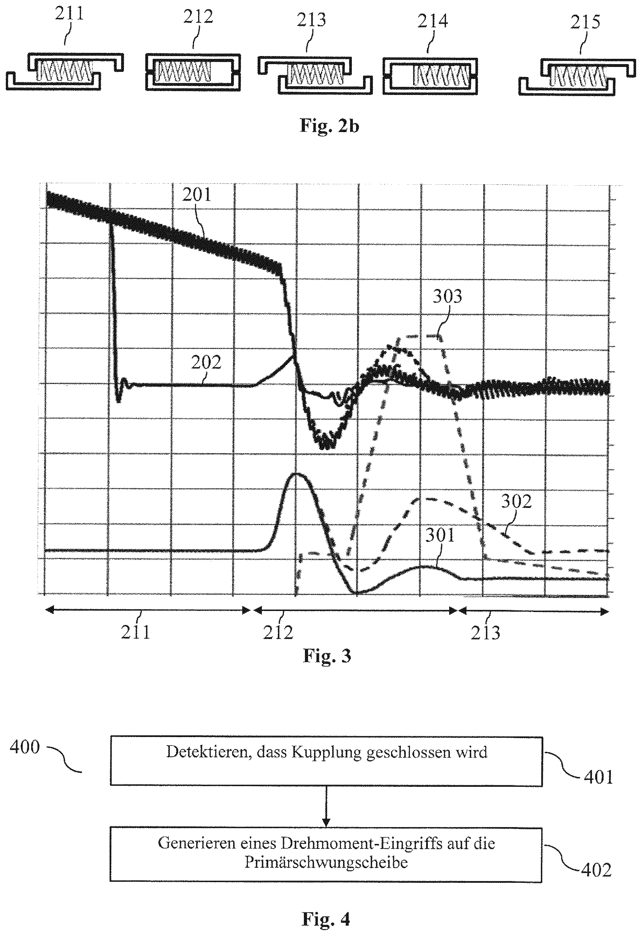

Bei einem Schaltvorgang kommt es typischerweise zu signifikanten Verdrehungen des ZMS 104. Dies ist beispielhaft in den Figuren 2a und 2b dargestellt. In den Figuren 2a und 2b ist insbesondere ein Hochschalt-Vorgang dargestellt (z.B. von einem dritten Gang auf einen vierten Gang). Ein Hochschalt-Vorgang erfolgt typischerweise im Rahmen einer Beschleunigung des Fahrzeugs.

Der Schaltvorgang wird durch ein Öffnen der Kupplung 105 initiiert. Bei geöffneter Kupplung wird im Getriebe 106 ein neuer Gang eingelegt (d.h. es wird ein Übersetzungsverhältnis des Getriebes 106 geändert). Desweiteren kann es bei Verwendung einer aktiven Drehzahlregelung zu einer automatischen Anpassung der Drehzahl des Verbrennungsmotors 102 kommen, um ein möglichst ruckfreies Schließen der Kupplung 105 zu ermöglichen. Dies ist beispielhaft aus Fig. 2a zu entnehmen, die den zeitlichen Verlauf der Kurbelwellen-Drehzahl 201 und der Eingangs-Drehzahl 202 des Getriebes 106 vor, während und im Anschluss an einen Schaltvorgang (im Zeitraum 203) zeigt. Vor dem Schaltvorgang entspricht die Kurbelwellen-Drehzahl 201 der Eingangs-Drehzahl 202 des Getriebes 106. Mit Öffnen der Kupplung 105 kommt es zu Abweichungen der Drehzahlen 201, 202. Insbesondere sinkt die Eingangs-Drehzahl 202 des Getriebes 106 durch Hochschalten des Getriebes 106 in einen höheren Gang. Mit dem Schließen der Kupplung 105 wird dann auch die Kurbelwellen-Drehzahl 201 auf den Wert der Eingangs-Drehzahl 202 reduziert (ggf. durch Einwirken einer aktiven Drehzahlregelung). Ab dem Zeitpunkt des Schließens der Kupplung 105 sind die Kurbelwellen-Drehzahl 201 und die Eingangs-Drehzahl 202 wieder gleich.

Während und nach schnellen Einkuppelvorgängen bei Schaltvorgängen kommt es typischerweise zu signifikanten Verdrehungen des ZMS 104. Fig. 2b zeigt beispielhafte Phasen 211, 212, 213, 214, 215 im Rahmen eines Schaltvorgangs, insbesondere im Rahmen eines Hochschaltvorgangs. Insbesondere zeigt Fig. 2b eine Abfolge von Phasen 211, 212, 213, 214, 215, die bei Schalt- bzw. Kuppelmanövern ab einer gewissen Motordrehzahl 201 auftreten kann. Die in Fig. 2b gezeigte Abfolge von Phasen kann insbesondere bei Manövern auftreten, bei denen eine relativ hohe Differenzdrehzahl zwischen Motor 102 und Eingang des Getriebes 106 unmittelbar vor dem Einkuppeln besteht und bei denen relativ zügig eingekuppelt wird.

Vor einem Hochschaltvorgang befindet sich der Antriebsstrang typischerweise in einer Zugphase, so dass die Bogenfeder 143 des ZMS 104 auf der Zugseite 151 angeordnet ist (Phase 211). Während und nach Schließen der Kupplung 105 wird durch Antriebsstrangschwingungen die Bogenfedern 143 des Zweimassenschwungrades 104 typischerweise auf der Schubseite 152 in mehr oder weniger komprimierter Form abgelegt (Phase 212 und 213). Der Einkuppelvorgang findet üblicherweise ohne Last statt, und die Bogenfedern 143 verbleiben auf der Schubseite 152 (Phase 213). Wird nun nach dem Einkuppelvorgang die Motorlast aus dem Schub erhöht, durchläuft der Flansch 145 des Zweimassenschwungrades 104 den Freiwinkel und legt sich auf die Zugseite der Bogenfedern 143 an. Aufgrund einer hohen, durch Fliehkraft verursachte, Haftreibung der Bogenfedern 143 kann es dabei vorkommen, dass die Bogenfedern 143 trotz der Einleitung der Zugphase weiterhin auf der Schubseite 152 gehalten werden (Phase 214). Bei einer weiteren Laststeigerung können dann die Bogenfedern 143, welche bis dahin durch die Fliehkraft-verursachte Reibung auf der Schubseite 152 gehalten wurden, schlagartig von der Schub- auf die Zugseite rutschen (Phase 215). Dieser Vorgang kann einen Ruck (siehe Drehzahl-Schwingungen 205 in Fig. 2a) im Antriebsstrang 100 verursachen, der für einen Fahrzeuginsassen als Zugaussetzer im Beschleunigungsvorgang spürbar sein kann.

Ein derartiger Ruck bei einer Fahrzeug-Beschleunigung im Anschluss an einen Schaltvorgang kann durch einen gezielten Momenten-Eingriff der Motorsteuerung vermieden werden. Insbesondere kann unmittelbar nach dem Drehzahlangleich, während des Einkuppelvorgangs, ein Drehmoment auf die Primärschwungscheibe 141 bewirkt werden (z.B. durch den Verbrennungsmotor 102 über die Kurbelwelle 103), so dass die Bogenfedern 143 während der Antriebsstrangschwingung (d.h. in der Phase 212) definiert auf der Zugseite 151 abgelegt werden. In der anschließenden Laststeigerung liegen die Bogenfedern 143 dann bereits auf der Zugseite 151 an und können nicht mehr durch den Bogenfederkanal 144 des ZMS 104 rutschen. Somit erfolgt während der Laststeigerung im Anschluss an einen Schaltvorgang kein Ruck bzw. Zugaussetzer.

Fig. 3 zeigt beispielhafte zeitliche Verläufe der Kurbelwellen-Drehzahl 201 und der Eingangs-Drehzahl 202 des Getriebes 106 während eines Hochschaltvorgangs. Desweiteren zeigt Fig. 3 den zeitlichen Verlauf der Lage der Bogenfedern 143 im ZMS 104 während des Schaltvorgangs. Insbesondere zeigt Fig. 3 den Verlauf 301 der Lage der Bogenfedern 143 ohne Momenten-Eingriff (durchgezogene Linie). Aus dem Verlauf 301 ist ersichtlich, dass die Bogenfedern 143 vor dem Schaltvorgang auf der Zugseite 151 liegen (Phase 211), und dass die Bogenfedern 143 beim Schließen der Kupplung 105 (d.h. im Anschluss an die Initiierung des Schließvorgangs der Kupplung 105 durch den Fahrer des Fahrzeugs) durch Schwingungen im Antriebsstrang 100 auf der Schubseite 152 abgelegt werden (Phase 213) und, aufgrund der Fliehkraft-bewirkten Haftreibung auch nach Wechsel in den Zugbetrieb durch Betätigen des Gaspedals auf der Schubseite 152 verbleiben (Phase 214).

Fig. 3 zeigt weiter einen Drehmoment-Puls 303, der während der Phase 212 der Schwingungen im Antriebsstrang 100 auf die Primärschwungscheibe 141 des ZMS 104 bewirkt wird. Durch diesen Drehmoment-Puls 303 werden die Bogenfeldern 143 definiert auf die Zugseite 151 gelegt (wie aus dem Verlauf 302 der Lage der Bogenfedern 143 zu entnehmen ist (gestrichelte Linie). Somit liegen die Bogenfeldern 143 auch nach Abklingen der Schwingungen des Antriebsstrangs 100 auf der Zugseite 151 (d.h. in Phase 213), so dass ein ruckartiges Durchrutschen der Bogenfedern 143 von der Schubseite 152 zur Zugseite 151 bei anschließender Beschleunigung des Fahrzeugs vermieden werden kann.

Fig. 4 zeigt ein Ablaufdiagramm eines beispielhaften Verfahrens 400 zur Steuerung eines Antriebsstrangs 100 eines Fahrzeugs bei einem Schaltvorgang. Das Verfahren 400 kann durch eine Steuereinheit 101 (z.B. durch ein Motorsteuergerät) ausgeführt werden. Der Antriebsstrang 100 umfasst einen Antriebsmotor 102, der über ein Bogenfeder-Zweimassenschwungrad 104, kurz ZMS, mit einem durch eine Kupplung 105 entkuppelbaren Getriebe 106 verbunden ist. Das ZMS 104 umfasst eine Bogenfeder 143, die in einem Bogenfederkanal 144 entlang einer Rotationsrichtung des ZMS 104 angeordnet ist. Die Bogenfeder 143 dreht sich somit mit dem ZMS 104 und eine Seitenfläche der Bogenfeder 143 wird dabei, aufgrund der Fliehkraft, an eine Innenwand des Bogenfederkanals 144 gedrückt.

Das Verfahren 400 umfasst das Detektieren 401, dass die Kupplung 105 im Rahmen eines Schaltvorgangs geschlossen wird. Insbesondere kann detektiert werden, dass ein Fahrer des Fahrzeugs durch Bewegen eines Kupplungspedals des Fahrzeugs veranlasst, dass die Kupplung 105 geschlossen wird. Das Verfahren 400 umfasst weiter, unabhängig von einer Drehmomentanforderung durch einen Fahrer des Fahrzeugs (d.h. insbesondere unabhängig von einer Betätigung eines Fahrpedals des Fahrzeugs), das Generieren 402 eines Drehmoment-Eingriffs 303 am ZMS 104 derart, dass die Bogenfeder 143 nach Schließen der Kupplung 105 auf der gleichen Seite 151, 152 (Schubseite oder Zugseite) des ZMS 104 angeordnet ist wie vor Öffnen der Kupplung 105. Dies kann insbesondere dadurch erreicht werden, dass eine Fliehkraft-verursachte Haftreibung der Bogenfeder 143 in dem Bogenfederkanal 144 durch den Drehmoment-Eingriff 303 unterstützt und dadurch nicht überwunden wird. Der Drehmoment-Eingriff 303 erfolgt dabei in Reaktion auf den detektierten Schließvorgang der Kupplung 105. Durch den Drehmoment-Eingriff 303 kann die Bogenfeder 143 in eine bestimmte Lage im Bogenfederkanal 144 gebracht werden. Insbesondere kann durch den Drehmoment-Eingriff 303 erreicht werden, dass die Bogenfeder 143 auf der Zugseite 151 des Bogenfederkanals 144 liegen bleibt, so dass ein Durchrutschen der Bogenfeder 143 durch den Bogenfederkanal 144 bei einem, auf den Schaltvorgang folgenden, Beschleunigungsmanöver vermieden wird.

Durch das in diesem Dokument beschriebene Verfahren 400 kann somit insbesondere ein Ruck (d.h. ein Zugaussetzer) bei Beschleunigungen im Anschluss an ein Schaltmanöver vermieden werden. So können eine Irritierung der Insassen eines Fahrzeugs vermieden und der Komfort erhöht werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Verfahren (400) zur Steuerung eines Antriebsstrangs (100) eines Fahrzeugs bei einem Schaltvorgang; wobei der Antriebsstrang (100) einen Antriebsmotor (102) umfasst, der über ein Bogenfeder-Zweimassenschwungrad (104), kurz ZMS, mit einem durch eine Kupplung (105) entkuppelbaren Getriebe (106) verbunden ist; wobei das ZMS (104) eine Bogenfeder (143) umfasst, die in einem Bogenfederkanal (144) entlang einer Rotationsrichtung des ZMS (104) angeordnet ist; wobei die Bogenfeder (143) im Bogenfederkanal (144) auf unterschiedlichen Seiten (151, 152) des ZMS (104) angeordnet sein kann; wobei das Verfahren (400) umfasst,
- Detektieren (401), dass die Kupplung (105) im Rahmen eines Schaltvorgangs geschlossen wird; und
- in Reaktion auf das Detektieren (401) und unabhängig von einer Drehmomentanforderung durch einen Fahrer des Fahrzeugs, Generieren (402) eines Drehmoment-Eingriffs (303) am ZMS (104) derart, dass die Bogenfeder (143) nach Schließen der Kupplung (105) auf der gleichen Seite (151, 152) des ZMS (104) angeordnet ist wie vor Öffnen der Kupplung (105).

2. Verfahren (400) gemäß Anspruch 1, wobei
- die Bogenfeder (143) im Bogenfederkanal (144) auf einer Zugseite (151) oder auf einer Schubseite (152) des ZMS (104) angeordnet sein kann; und
- die Bogenfeder (143) durch den Drehmoment-Eingriff (303) auf der Zugseite (151) des ZMS (104) abgelegt wird.

3. Verfahren (400) gemäß einem der vorhergehenden Ansprüche, wobei der Drehmoment-Eingriff (303) derart generiert wird, dass während einer Phase (212), in der durch das Schließen der Kupplung (105) Schwingungen im ZMS (104) bewirkt werden, die Haftreibung der Bogenfeder (143) unterstützt, insbesondere nicht überwunden, wird.

4. Verfahren (400) gemäß einem der vorhergehenden Ansprüche, wobei
- das Verfahren (400) umfasst, Ermitteln einer Drehzahl (201) des Antriebsmotors (102); und
- der Drehmoment-Eingriff (303), insbesondere eine Amplitude des Drehmoment-Eingriffs (303), von der Drehzahl (201) des Antriebsmotors (102) abhängt.

5. Verfahren (400) gemäß einem der vorhergehenden Ansprüche, wobei
- das ZMS (104) eine Primärschwungscheibe (141) und eine Sekundärschwungscheibe (142) mit einem Flansch (145) umfasst, die gegeneinander verdreht werden können;
- die Bogenfeder (143) in dem Bogenfederkanal (144) durch einen Flanschflügel (146) des Flansches (145) komprimiert werden kann, um ein Drehmoment von der Primärschwungscheibe (141) auf die Sekundärschwungscheibe (142) zu übertragen; und
- durch den Drehmoment-Eingriff die Fliehkraft-verursachte Haftreibung zwischen einer Innenwand des Bogenfederkanals (144) und der Bogenfeder (143) derart unterstützt wird, dass die Bogenfeder (143) auf der gleichen Seite (151, 152) des ZMS (104) verbleibt wie vor Öffnen der Kupplung (105).

6. Verfahren (400) gemäß einem der vorhergehenden Ansprüche, wobei der Drehmoment-Eingriff (303)
- zeitlich nach einer Anpassung einer Drehzahl (201) des Antriebsmotors (102) und einer Eingangs-Drehzahl (202) des Getriebes (106) erfolgt; und/oder
- innerhalb einer vorbestimmten Zeit nach dem Detektieren (401) des Schließvorgangs der Kupplung (105) erfolgt, wobei die Zeit insbesondere 1 Sekunde, 0,5 Sekunden, 0,2 Sekunden oder weniger ist.

7. Verfahren (400) gemäß einem der vorhergehenden Ansprüche, wobei im Rahmen des Schaltvorgangs
- die Kupplung (105) in Reaktion auf eine Eingabe des Fahrers des Fahrzeugs geöffnet und anschließend wieder geschlossen wird; und
- ein Umsetzungsverhältnis des Getriebes (106) in Reaktion auf eine Eingabe des Fahrers des Fahrzeugs bei geöffneter Kupplung derart geändert wird, dass eine Eingangs-Drehzahl (202) des Getriebes (106) reduziert wird.

8. Verfahren (400) gemäß Anspruch 7, wobei im Rahmen des Schaltvorgangs nach Änderung des Übersetzungsverhältnisses und vor Schließen der Kupplung (105) eine Drehzahl (201) des Antriebsmotors (102), insbesondere durch eine aktive Drehzahlregelung, reduziert wird.

9. Verfahren (400) gemäß einem der vorhergehenden Ansprüche, wobei der Drehmoment-Eingriff (303)
- durch den Antriebsmotor (102) generiert wird; und/oder
- auf eine angetriebene Seite des ZMS (104) erfolgt.

10. Verfahren (400) gemäß einem der vorhergehenden Ansprüche, wobei detektiert wird, dass die Kupplung (105) im Rahmen eines Hochschaltvorgangs geschlossen wird.

## Claims

1. A method (400) for controlling a drivetrain (100) of a vehicle during a shift process; wherein the drivetrain (100) comprises a drive motor (102), which is connected via a bow spring dual-mass flywheel (104), DMF for short, to a transmission (160) which can be uncoupled by a clutch (105), wherein the DMF (104) comprises a bow spring (143), which is arranged in a bow spring channel (144) along a direction of rotation of the DMF (104), wherein the bow spring (143) can be arranged in the bow spring channel (144) on different sides (151, 152) of the DMF (104), wherein the method (400) comprises
- detecting (401) that the clutch (105) is closed within the scope of a shift process, and
- in response to the detection (401) and regardless of a torque request by a driver of the vehicle, generating (402) a torque-transmitting engagement (303) at the DMF (104) in such a way that the bow spring (143), once the clutch (105) has been closed, is arranged on the same side (151, 152) of the DMF (104) as before opening of the clutch (105).

2. A method (400) according to claim 1, wherein
- the bow spring (143) can be arranged in the bow spring channel (144) on a traction side (151) or on an overrun side (152) of the DMF (104), and
- the bow spring (143) is stored on the traction side (151) of the DMF (104) by the torque-transmitting engagement (303).

3. A method (400) according to either one of the preceding claims, wherein the torque-transmitting engagement (303) is generated in such a way that, during a phase (212) in which vibrations in the DMF (104) are caused by the closing of the clutch (105), the static friction of the bow spring (143) is assisted, more especially is not overcome.

4. A method (400) according to any one of the preceding claims, wherein
- the method (400) comprises determining the speed (201) of the drive motor (102), and
- the torque-transmitting engagement (303), more especially the amplitude of the torque-transmitting engagement (303), is dependent on the speed (201) of the drive motor (102).

5. A method (400) according to any one of the preceding claims, wherein
- the DMF (104) comprises a primary flywheel (141) and a secondary flywheel (142) with a flange (145), which can be rotated relative to one another;
- the bow spring (143) can be compressed in the bow spring channel (144) by a flange vane (146) of the flange (145) so as to transmit a torque from the primary flywheel (141) to the secondary flywheel (142), and
- the static friction between an inner wall of the bow spring channel (144) and the bow spring (143), which static friction is caused by centrifugal force, is assisted by the torque-transmitting engagement in such a way that the bow spring (143) remains on the same side (151, 152) of the DMF (104) as before opening of the clutch (105).

6. A method (400) according to any one of the preceding claims, wherein the torque-transmitting engagement (303)
- occurs temporally after an adaptation of the speed (201) of the drive motor (102) and the input speed (202) of the transmission (106); and/or
- occurs within a predetermined time following the detection (401) of the closing process of the clutch (105), wherein the time is more especially 1 second, 0.5 seconds, 0.2 seconds or less.

7. A method (400) according to any one of the preceding claims, wherein, within the scope of the shift process,
- the clutch (105) is opened in response to an input made by the driver of the vehicle and is then closed again, and
- a transmission ratio of the transmission (106) is changed in response to an input made by the driver of the vehicle when the clutch is opened, such that the input speed (202) of the transmission (106) is reduced.

8. A method (400) according to claim 7, wherein, within the scope of the shift process, once the transmission ratio has been changed and before the clutch (105) is closed, the speed (201) of the drive motor (102) is reduced, more especially by an active speed control.

9. A method (400) according to any one of the preceding claims, wherein the torque-transmitting engagement (303)
- is generated by the drive motor (102), and/or
- occurs on a driven side of the DMF (104).

10. A method (400) according to any one of the preceding claims, wherein it is detected that the clutch (105) is closed within the scope of an upshift process.

## Revendications

1. Procédé (400) de commande d'une chaîne cinématique (100) d'un véhicule lors d'une opération de commutation ; la chaîne cinématique (100) comprenant un moteur d'entraînement (102) relié par l'intermédiaire d'un volant d'inertie à deux masses et ressort en arc (104) (en abrégé ZMS) à une boîte de vitesse (106) débrayable par un embrayage (105), le volant d'inertie ZMS (104) comportant un ressort en arc (143) installé dans un canal de ressort en arc (144) selon une direction de rotation du volant d'inertie ZMS (104), le ressort en arc (143) étant installé dans le canal de ressort (144) sur des côtés différents (151, 152) du volant d'inertie ZMS (104),
procédé (400) comprenant les étapes consistant à :
- détecter (401) que l'embrayage (105) est fermé dans le cas d'une opération de commutation, et
- en réaction à la détection (401) et indépendamment d'une demande de couple par le conducteur du véhicule, générer (402) une action de couple (303) sur le volant d'inertie ZMS (104) de façon qu'après la fermeture de l'embrayage (105), le ressort en arc (143) soit sur le même côté (151,152) du volant d'inertie ZMS (104) qu'avant l'ouverture de l'embrayage (105).

2. Procédé (400) selon la revendication 1,
selon lequel
- le ressort en arc (143) est logé dans le canal à ressort (144) sur le côté de traction (151) ou sur le côté de poussée (152) du volant d'inertie ZMS (104), et
- le ressort en arc (143) est mis par l'action sur le couple (303) sur le côté de traction (151) du volant d'inertie ZMS (104).

3. Procédé (400) selon l'une des revendications précédentes,
selon lequel
on génère l'action sur le couple (303) de façon que pendant une phase (212) dans laquelle la fermeture de l'embrayage (105) produit des oscillations dans le volant d'inertie ZMS (104), le frottement d'accrochage du ressort en arc (143) est soutenu et notamment il n'est pas supprimé.

4. Procédé (400) selon l'une des revendications précédentes,
selon lequel
- le procédé (400) consiste à déterminer une vitesse de rotation (201) du moteur d'entrainement (102), et
- l'action sur le couple (303) notamment l'amplitude de cette action sur le couple (303) dépend de la vitesse de rotation (201) du moteur d'entraînement (102).

5. Procédé (400) selon l'une des revendications précédentes,
selon lequel
- le volant d'inertie ZMS (104) a un disque d'inertie primaire (141) et un disque d'inertie secondaire (142) avec une bride (145) et qui peuvent être tournés l'un par rapport à l'autre,
- le ressort en arc (143) est comprimé dans le canal à ressort (144) par une aile (146) de la bride (145) pour transmettre le couple du disque d'inertie primaire (141) au disque d'inertie secondaire (142), et
- l'action sur le couple soutient le frottement par friction occasionné par la force centrifuge entre la paroi intérieure du canal de ressort en arc (144) et le ressort en arc (143) de façon que le ressort (143) reste sur le même côté (151, 152) du volant d'inertie ZMS (104) qu'avant l'ouverture de l'embrayage (105).

6. Procédé (400) selon l'une des revendications précédentes,
selon lequel
l'action sur le couple (303),
- se fait chronologiquement après l'adaptation de la vitesse de rotation (201) du moteur d'entraînement (102) et de la vitesse de rotation d'entrée (202) de la boîte de vitesse (106), et
- dans une durée prédéfinie après la détection (401) de l'opération de fermeture de l'embrayage (105), cette durée étant notamment d'une seconde, 0,5 secondes, 0,2 secondes ou moins.

7. Procédé (400) selon l'une des revendications précédentes,
selon lequel
dans le cadre de l'opération de commutation,
- l'embrayage (105) s'ouvre en réaction à une entrée faite par le conducteur du véhicule et ensuite il se referme, et
- le rapport de transmission de la boîte de vitesse (106) est modifié en réaction à une entrée du conducteur lorsque l'embrayage est ouvert, de façon à réduire la vitesse de rotation d'entrée (202) de la boîte de vitesse (106).

8. Procédé (400) selon la revendication 7,
selon lequel
dans le cadre de l'opération de commutation, après modification du rapport de transmission et avant la fermeture de l'embrayage (105), la vitesse de rotation (201) du moteur d'entraînement (102) est réduite notamment par une régulation active de la vitesse de rotation.

9. Procédé (400) selon l'une des revendications précédentes,
selon lequel
l'action sur le couple (303),
- est générée par le moteur d'entraînement (102), et/ou
- se fait sur le côté entraîné du volant d'inertie ZMS (104).

10. Procédé (400) selon l'une des revendications précédentes,
selon lequel
on détecte que l'embrayage (105) est fermé dans le cadre d'une opération de commutation vers le haut.
